# EUROPÄISCHE PATENTSCHRIFT

(11) **EP 2 646 678 B1**
(45) Veröffentlichungstag und Bekanntmachung des Hinweises auf die Patenterteilung: **08.02.2023**
(21) Anmeldenummer: 11794023.9
(22) Anmeldetag: 14.11.2011
(51) Int. Cl.: F02P 5/04, F02D 19/02, F02D 41/14, F02M 21/02, F02D 41/00, F02B 43/12, F02P 5/15

(54) **VERFAHREN UND STEUEREINRICHTUNG ZUM BETRIEB EINES OTTO-GASMOTORS**
METHOD AND CONTROL DEVICE FOR OPERATING A SPARK IGNITION GAS ENGINE
PROCÉDÉ ET DISPOSITIF DE COMMANDE D'UN MOTEUR À GAZ À ALLUMAGE COMMADÉ

(30) Priorität: 30.11.2010 DE 102010062198
(43) Veröffentlichungstag der Anmeldung: 09.10.2013
(73) Patentinhaber: Rolls-Royce Solutions Augsburg GmbH, 86165 Augsburg (DE)
(72) Erfinder: DIEHL, Markus, 86169 Augsburg (DE); LINDERMAYR, Tobias, 86676 Ehekirchen (DE)
(74) Vertreter: Eisenführ Speiser
(86) Internationale Anmeldenummer: PCT/EP2011/005720
(87) Internationale Veröffentlichungsnummer: WO 2012/072195

(56) Entgegenhaltungen:
- EP-A2- 0 894 959
- WO-A1-2012/012511
- DE-A1- 4 109 561
- DE-A1- 19 808 829
- DE-B4-102004 060 893
- JP-A- 7 071 322
- US-A1- 2009 076 709

## Beschreibung

Die Erfindung betrifft ein Verfahren gemäß dem Oberbegriff des Anspruchs 1 zum Betrieb eines Otto-Gasmotors unter Einstellung eines Zündzeitpunktes aufweisend die Schritte: Mischen von Luft und Brenngas zu einem Verbrennungs-Gasgemisch in einer Mischanordnung, Zuführen und Zünden des Ver- brennungs-Gasgemisches in einem Verbrennungsraum unter Einstellen eines Zündzeit- punkts sowie Verbrennen des Verbrennungs-Gasgemisches unter Auslass von Abgas aus dem Verbrennungsraum. Weiter betrifft die Erfindung eine Steuereinrichtung zum Betrieb eines Otto-Gasmotors.

Ein Verfahren und eine Steuereinrichtung der eingangs genannten Art zum Betrieb eines Otto-Gasmotors der eingangs genannten Art ist in DE 10 2004 060 893 B4 beschrieben. Otto-Gasmotoren der genannten Art werden zunehmend in Systemen zur dezentralen Energieerzeugung in Kombination mit einem Generator eingesetzt. Diese Systeme können zur reinen Stromerzeugung oder für eine Kraft-Wärme-Kälte-Kopplung eingesetzt werden. Zur Stromerzeugung können solche Systeme bevorzugt als Notstrom-, Dauerstrom- oder Spitzenlast-Stromaggregat eingesetzt werden und auf den spezifischen Anwendungsfall ausgelegt sein.

DE 41 09 561 A1 beschreibt eine Motor-Steuervorrichtung, mit der für den Fall, dass der Motor bei Hochdrehzahl und Hochlastbedingungen betrieben wird, ein Luft-/Kraftstoffverhältnis eines in den Motor einzuspeisenden Luft-/Kraftstoff-Gemisches jedes Mal auf einen fetteren Wert geändert wird, wenn eine Abgastemperatur einen Zielwert überschreitet. Dabei wird die Zeitsteuerung der auf den Motor gegebenen Zündfunken in Verknüpfung mit dem veränderten Luft-Kraftstoffverhältnis abgeändert, um das Motorantriebs-Drehmoment, auf einem gleichbleibenden Wert zu halten. Die Luftmenge, der der Eintritt in die Brennkammer des Motors durch den Ansaugkrümmer ermöglicht wird, wird über ein Drosselklappenventil gesteuert, das am Einlasskanal angeordnet ist. Die Drosselklappe ist über ein mechanisches Gestänge bzw. Getriebe mit einem Gaspedal verbunden. Das Luft-/Kraftstoffverhältnis wird unter Hochdrehzahl und Hochlastbedingungen so gesteuert, dass das Luft-/Kraftstoffverhältnis stufen- bzw. schrittweise jedes Mal angehoben wird, wenn die Abgastemperatur einen Zielwert überschreitet. Das Luft-/Kraftstoffverhältnis wird bei dem momentan vorliegenden Wert so lange gehalten, wie die Abgastemperatur kleiner ist als der Zielwert.

US 2009/0076709 A1 beschreibt ein anderes Verfahren zum Betrieb eines Gasmotors unter Einstellung eines Zündzeitpunkts. Hier wird Gasmenge und Luftmenge mittels einer Drehzahlregelung und einer Gas-Luft-Verhältnisregelung eingestellt. Ein Drosselventil zur Steuerung des Flusses des Gas-Luft-Gemisches zur Verbrennungskammer ist an einer Gemischzuführung angebracht und die Gemischflussrate kann über die Öffnung des Drosselventils gesteuert werden.

WO 2012/012511 A1 beschreibt ein anderes System zum Steuern einer Verbrennungsmaschine, bei welcher ein Luft-/Brennstoffverhältnis, ein Zündzeitpunkt und eine Brennstofinjektionszeitpunkt-Steuerung vorgesehen ist. Das Luft-/Brennstoffverhältnis, der Zündzeitpunkt und Brennstofinjektionszeitpunkt-Steuerung basiert auf einem Signal, das die Betriebsbedingung der Brennkraftmaschine und die Last und eine Soll-Ist-Differenz der Abgastemperatur anzeigt.

DE 10 2004 060 893 B4 ist zu entnehmen, dass es beim Betrieb eines Otto-Gasmotors - vor allem mit dem Brennstoff Biogas - zu beträchtlichen Schwankungen des Brennwertes und des Brennverhaltens eines Brenngases kommen kann. So ist es möglich, dass z. B. bei Biogasanlagen mit Konfermentation ein CH₄-Gehalt im Brenngas einen Schwankungsbereich von 45 bis 65 % aufweist. In den meisten Fällen ist der komplementäre Brenngasanteil C0₂, sodass mitzunehmendem COz-Anteil die Brenngeschwindigkeit des Verbrennungs-Gasgemisches abnimmt. Dies kann zu einem Abfall des effektiven Wirkungsgrads und einem Anstieg der Abgastemperatur, ggfs. auch der NOx-Emission, führen, wenn der Zündzeitpunkt für eine Zündeinrichtung des Otto-Gasmotors nicht angepasst wird. Grundsätzlich wurde erkannt, dass eine Anpassung des Zündzeitpunkts erforderlich ist, um der Variation des Brennverhaltens des Brenngases beim Betrieb eines Otto-Gasmotors Rechnung zu tragen. Gemäß DE 10 2004 060 893 B4 sind technisch und wirtschaftlich aufwändige Gassensoren zur Ermittlung des Brennverhaltens eines Brenngases jedoch möglichst zu vermeiden. Insofern gestaltet sich die Bestimmung der Zusammensetzung des verwendeten Brenngases zur Behebung der vorgenannten ungünstigen Einflüsse bei einem Otto-Gasmotor als problematisch.

Gemäß DE 10 2004 060 893 B4 wurde erkannt, dass es möglich ist, den Zündzeitpunkt in Abhängigkeit von einem Ist-Wert der Abgastemperatur einzustellen. Dazu kann ein Sollwert für die Abgastemperatur vorgegeben und der Zündzeitpunkt so eingestellt werden, dass die Abgastemperatur auf den Sollwert geführt wird. Gemäß DE 10 2004 060 893 B4 wurde erkannt, dass durch Änderung des Zündzeitpunkts eine Veränderung des Brennverhaltens bzw. des COz-Anteils des Brenngases in definierter Weise kompensiert werden kann. Dies stellt eine Möglichkeit dar, einen im Wesentlichen konstanten effektiven Wirkungsgrad und eine definierte NOx-Emission unterVermeidung eines Gassensors zu erzielen, auch wenn die Zusammensetzung des Brenngases vergleichsweise stark schwankt.

Ein solches, in Ansätzen erfolgreiches, Konzept hat jedoch seine Grenzen, wenn die Abgastemperatur aufgrund anderer Einflüsse, wie z. B. mit zunehmendem Verschleiß eines Motors, ansteigt. In dem Fall würde eine nach DE 10 2004 060 893 B4 vorgenommene Zündzeitpunkteinstellung nach früh unter ungünstigen Randbedingungen dazu führen, dass der Otto-Gasmotor in einen klopfendem Betrieb kommt. Mit anderen Worten führt eine bloße abgastemperaturabhängige Regelung des Zündzeitpunkts mit zunehmendem Verschleiß des Motors dazu, dass der Motor nicht mehr entsprechend der Gasqualität bzw. nicht mehr entsprechend dem Brennverhalten des Brenngases betriebenwird.

Wünschenswert ist eine auch für solche Fälle verlässliche Betriebsweise eines Otto-Gasmotors.

In EP 0 259 382 B1 wird ebenfalls zur Vermeidung anfälliger Gassensoren, nämlich Sauerstoffsonden, ein Verfahren zur Regelung des Luftverhältnisses eines Otto-Gasmotors vorgeschlagen. Die dort vorgeschlagene Lösung sieht jedoch keine Anpassung des Zündzeitpunkts vor, sondern vielmehr eine Regelung eines Lambda-Wertes des Verbrennungs-Gasgemisches innerhalb eines geforderten Lambda-Bereiches. Dazu wird in EP O 259 382 B1 der Otto-Gasmotor auf eine magere Betriebsweise geregelt, indem ein Lambda-Regler abhängig von einem Verbrennungs-Gasgemisch-Druck vor den Einlassventilen des Motors leistungsabhängig geführt wird. Voraussetzung fürein solches Regelverfahren sind konstante motortechnische Größen wie Füllungs- und Wirkungsgrad des Motors. Diese Vorrausetzungen sind zwar im praktischen Betrieb weitgehend anzutreffen, jedoch kommt es bei eingangs erläutertem stark variierendem Brennverhalten des Brenngases bei fehlender Anpassung des Zündzeitpunkts zu starken Abweichungen der NOx-Emission und des effektiven Wirkungsgrads von den gewünschten Werten.

Wünschenswert ist insofern ein verbessertes Konzept, bei dem ein Volumenstrom eines Brenngases oder Verbrennungs-Gasgemisches anpassbar ist. Insbesondere soll unter Vermeidung von aufwändiger Gassensorik, ein Zündzeitpunkt entsprechend der Zusammensetzung eines Brenngases oder Verbrennungs-Gasgemisches anpassbar sein. Insbesondere sollen die Nachteile, wie sie mit einer Temperaturregelung gemäß DE 102004 060 893 B4 verknüpft sind, möglichst vermieden werden.

An dieser Stelle setzt die Erfindung an, deren Aufgabe es ist, ein Verfahren und eine Steuereinrichtung anzugeben, bei denen eine aufwändige Gassensorik zur Bestimmung einer Zusammensetzung eines Brenngases oder Verbrennungs-Gasgemisches möglichst vermieden ist und dennoch eine Anpassung des Zündzeitpunkts hinsichtlich einer Zusammensetzung des Brenngases oder Verbrennungs-Gasgemisches in verbesserter Weise möglich ist. Insbesondere soll ein Verfahren und eine entsprechende Vorrichtung vergleichsweise verlässlich und robust gegen altersbedingte Einflüsse eines Otto-Gasmotors sein.

Betreffend das Verfahren wird die Aufgabe durch die Erfindung mittels eines Verfahrens der eingangs genannten Art gelöst, bei dem erfindungsgemäß die Merkmale des Anspruchs 1 vorgesehen sind.

Betreffend die Steuereinrichtung wird die Aufgabe durch die Erfindung mittels einer Steuereinrichtung der eingangs genannten Art gelöst, bei der erfindungsgemäß die Merkmale des Anspruchs 11 vorgesehen sind.

Insbesondere hat sich das Konzept der Erfindung bewährt bei einem Betrieb eines Otto-Gasmotors mit Brenngas in Form von Biogas.

Die Erfindung umfasst die Überlegung, dass eine primär auf eine Abgastemperatur abstellende Zündzeitpunkteinstellung, wie sie in DE 10 2004 060 893 B4 konkret beschrieben ist, altersbedingte Einflüsse eines Otto-Gasmotors bei der Regelung des Zündzeitpunkts nur unzureichend berücksichtigt. Andererseits hat die Erfindung erkannt, dass eine Einstellung des Zündzeitpunkts des Otto-Gasmotors in Abhängigkeit der Abgastemperatur grundsätzlich vorteilhaft ist. Die Erfindung hat weiter erkannt, dass die Einstellung des Zündzeitpunkts entsprechend der Zusammensetzung des verwendeten Brenngases oder Verbrennungs-Gasgemisches vorteilhaft ist. Insbesondere kann dadurch eine die Zusammensetzung des Brenngases oder Verbrennungs-Gasgemisches messende Gassensorik vermieden werden. Die Erfindung geht von der Überlegung aus, dass sich ein Gemischregler grundsätzlich eignet, das Problem zu lösen. Darüberhinaus hat die Erfindung erkannt, dass eine Lösung wie sie in EP 0 259 382 B1 beschrieben ist noch verbesserbar ist, insbesondere bei einem Betrieb eines Otto-Gasmotors mit Brenn- gas in Form von Biogas.

Von der Erfindung wurde darüber hinaus erkannt, dass es möglich ist, unter Vorgabe einer Drossel-Stellung einer Komponente einer Mischanordnung zum Mischen von Luft und Brenngas zum Verbrennungs-Gasgemisch, die Drossel-Stellung genutzt werden kann, um den Zündzeitpunkt des Otto-Gasmotors einzustellen. Anders formuliert hat die Erfindung erkannt, dass sich eine Drossel-Stellung einer Komponente der Mischanordnung für eine Regelung des Zündzeitpunktes heranziehen lässt. Die Erfindung hat erkannt, dass diese Maßnahme zum Erfolg führt, d.h. unter Anpassung des Zündzeitpunkts zu einem vergleichsweise konstanten Wirkungsgrad und NOx-Emission führt, wenn die Drossel-Stellung in Kombination mit der Abgastemperatur bei der Regelung berücksichtigt wird, um abhängig von der Kombination den Zündzeitpunkt des Otto-Gasmotors einzustellen.

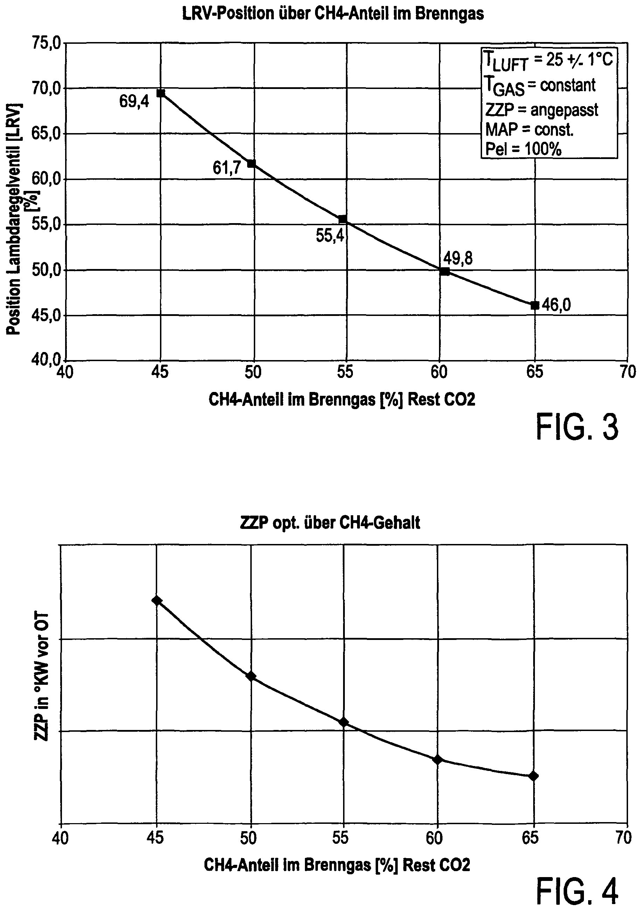

Aus den beispielhaft in Fig. 3 bis Fig. 6 dargestellten Prüfstandsversuchen hat die Anmelderin erkannt, dass es in der definierten Konstellation möglich ist, insbesondere auch ohne Gassensorik, eine zuverlässige Information über das Brennverhalten, insbesondere Brennwert und/oder Zusammensetzung des Brenngases zu liefern und dann der Zündzeitpunkt in Abhängigkeit von der Drossel-Stellung und der Abgastemperatur eingestellt, insbesondere geregelt, werden kann. Die Erfindung nutzt die Drossel-Stellung einer Komponente der Mischanordnung als Eingangswert für einen Zündzeitpunktgeber, um zuverlässig eine Information über das Brennverhalten des Brenngases zu liefern, die üblicherweise nur aufwändig gassensorisch bestimmbar wäre. Diese Maßnahme funktioniert - wie von der Erfindung weiter erkannt wurde - soweit ein Gemischregler genutzt wird, um die Drossel-Stellung als Stellgröße vorzugeben, und soweit der Zündzeitpunkt auch in Abhängigkeit der Abgastemperatur eingestellt wird.

Im Rahmen einer besonders bevorzugten Weiterbildung lässt sich der Zündzeitpunkt in Abhängigkeit der Drossel-Stellung derart einstellen, dass zunächst allein aufgrund der Drossel-Stellung ein vorläufiger Zündzeitpunkt ermittelt wird. Bevorzugt kann dazu ein vorläufiger Zündzeitpunkt in Abhängigkeit eines Brennverhaltens des Brenngases angegeben werden, z. B. jeweils über eine motorspezifische Kennlinie oder eine andere dergleichen korrelierende Information. Insbesondere weist eine bevorzugte Steuereinrichtung eine geeignet ausgebildete Recheneinheit mit Kennlinien auf, die eine auf den Otto-Gasmotor ausgelegte Drossel-Stellung bzw. einen auf den Otto-Gasmotor ausgelegten Zündzeitpunkt in Abhängigkeit von einem Brennverhalten des Brenngases angeben. Anders formuliert kann auch die Drossel-Stellung in Abhängigkeit eines Brennverhaltens des Brenngases angegeben werden.

Die Erfindung hat erkannt, dass sich über die Zusammensetzung des Brenngases die Drossel-Stellung und der vorläufige Zündzeitpunkt korrelieren lassen, um einen Sollwert für einen Zündzeitpunkt des Otto-Gasmotors in Abhängigkeit der Drossel-Stellung anzugeben. Im Rahmen der Erfindung ist es möglich, dass zunächst kontrolliert wird, ob ein Ist-Wert einer Abgastemperatur innerhalb eines vorgegebenen Abgastemperaturbereichs liegt oder verbleibt, bevor ein aus dem Sollwert des Zündzeitpunkts ermittelter Regelwert des Zündzeitpunkts einer Zünd- einrichtung des Otto-Gasmotors als Führungsgröße übermittelt wird.

Mit Erfolg hat die Erfindung erkannt, dass bei sinkendem Brennwert des Brenngases (z.B. durch Abnahme des CH₄-Gehalts im Biogas) beispielsweise ein Gas-Regelventil, Lambda-Regelventil oder dergleichen Drosselmittel der Mischanordnung weiter geöffnet werden sollte, um eine NOx-Emission konstant zu halten oder einen effektiven Wirkungsgrad des Otto-Gasmotors konstant zu halten. Dadurch wird, bei gleicher Motorleistung, eine Zunahme der Menge des Brenngases bewirkt, sodass sich im Umkehrschluss ein reproduzierbarer Zusammenhang zwischen einer Drossel-Stellung der Komponente der Mischanordnung (z.B. Lambda-Regelventil) und dem Brennwert des Brenngases ergibt. Die Erfindung hat in diesem Zusammenhang erkannt, dass sich dieser reproduzierbare Zusammenhang als Kennlinie für eine Regelstrecke nutzen lässt. Die Erfindung hat erkannt, dass Einflüsse wie Motorleistung, Luft- oder Gastemperatur des Verbrennungs-Gasgemisches darüberhinaus vergleichsweise gering sind und außer zur Bewirkung von linearen Korrekturen den grundsätzlichen Erfolg des Konzepts nicht beeinträchtigen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Besonders bevorzugt weist der Gemischregler einen Eingang für eine Leistung des Otto-Gasmotors oder eines Generators auf. Bevorzugt weist der Gemischregler auch einen Eingang für einen Druck und/oder eine Temperatur eines Verbrennungs-Gasgemisches auf. Insbesondere, aber nicht notwendigerweise, kann im Rahmen der vorgenannten besonders bevorzugten Weiterbildung eine Drossel-Stellung einer Komponente der Mischanordnung in Kombination mit einer Abgastemperatur des Abgases genutzt werden, um den Zündzeitpunkt bei einem Otto-Gasmotor einzustellen.

Grundsätzlich kann die Drossel-Stellung von dem Gemischregler als Sollwert direkt an einen Zündzeitpunktgeber übermittelt werden und so in Kombination mit einer Abgastemperatur zur Bestimmung des Zündzeitpunkts dienen. Es kann auch die Drossel-Stellung der Komponente der Mischanordnung als Ist-Wert an den Zündzeitpunktgeber übermittelt werden, um den Zündzeitpunkt des Otto-Gasmotors einzustellen. Relevant ist insofern entweder ein Sollwert oder ein Ist-Wert einer Drossel-Stellung jeweils allein oder in Kombination zur Einstellung eines Zündzeitpunkts zusammen mit einer Abgastemperatur.

Vorteilhaft lässt sich das Verfahren zum Betrieb eines Otto-Gasmotors im Rahmen einer Weiterbildung als Option im Rahmen eines allgemeinen Betriebsverfahrens aktivieren oder deaktivieren. So lässt sich das Verfahren gemäß dem Konzept der Erfindung als Option aktivieren für den Fall, dass Brenngas mit stark variierendem Brennverhalten, insbesondere Brennwert und/oder Zusammensetzung, z. B. Biogas, zum Betrieb des Otto-Gasmotors zum Einsatz kommt. Das Verfahren gemäß dem Konzept der Erfindung lässt sich im Rahmen dieser Weiterbildung auch deaktivieren für den Fall, dass ein Brenngas zum Betrieb des Otto-Gasmotors zum Einsatz kommt, das nur eine vernach- lässigbare Schwankungsbreite eines Brennverhaltens aufweist, wie z. B. Erdgas.

Eine besonders bevorzugte Weiterbildung sieht ein System zur dezentralen Energieerzeugung mit einem Otto-Gasmotor und einem daran angeschlossenen Generator zur Bildung eines Stromaggregats vor, wobei der Zündzeitpunktgeber und/oder der Gemischregler über eine Messleitung zur Führung einer Leistung mit dem Otto-Gasmotor und/oder mit dem Generator verbunden sind. Damit nutzt die Weiterbildung eine Steuer- einrichtung mit einem Zündzeitpunktgeber als auch einem Gemischregler, die über eine Leistung des Otto-Gasmotors bzw. Generators kombiniert sind.

Vorteilhaft kann der Zündzeitpunktgeber --neben Eingängen für die Temperatur des Abgases und der Drossel-Stellung-- auch einen Eingang für die Temperatur des Brenngases und die Temperatur der Luft haben. Ebenso kann der Gemischregler - neben dem Ausgang für eine Drossel-Stellung - auch einen Eingang für die Leistung des Otto-Motors bzw. des Generators aufweisen. Vorteilhafterweise weist der Gemischregler auch einen Eingang für die Temperatur und/oder den Druck eines Verbrennungs-Gasgemisches auf. Damit lassen sich gewisse weitere, insbesondere lineare, Regelkorrekturen umsetzen.

Vorteilhaft kann - bei Bedarf zusätzlich - der Zündzeitpunktgeber in Abhängigkeit der Leistung des Otto-Gasmotors bzw. des Generators, einen endgültigen oder vorläufigen Zündzeitpunkt an eine Zündeinrichtung des Otto-Gasmotors weitergeben. Dies kann den Vorteil haben, dass der Zündzeitpunkt des Verbrennungs-Gasgemisches in einem Verbrennungsraum des Otto-Gasmotors leistungsabhängig beeinflussbar ist, insbesondere das Verbrennungs-Gasgemisches -unter anderem- leistungsabhängig gezündet, verbrannt und als Abgas ausgelassen wird.

Betreffend die Vorrichtung wird die Aufgabe durch die Erfindung auch mittels eines Otto-Gasmotors, insbesondere mit einem Wärmetauscher zur Bildung einer Kraft-Wärme-Kopplung gelöst. Der Otto-Gasmotor weist insbesondere eine Steuereinrichtung nach dem vorgenannten Konzept auf. Insbesondere weist der Otto-Gasmotor auf:
- eine Mischanordnung zum Mischen von Luft und Brenngas zu einem Verbrennungs-Gasgemisch,
- einer Verbrennungs-Gasgemischführung zum Zuführen des Verbrennungs-Gasgemisches zu einem Verbrennungsraum des Otto-Gasmotors,
- eine Zündeinrichtung zum Zünden des Verbrennungs-Gasgemisches im Verbrennungsraum unter Einstellen eines Zündzeitpunkts,
- eine Abgasführung zum Auslass des Abgases des verbrannten Verbrennungs-Gasgemisches aus dem Verbrennungsraum. Erfindungsgemäß ist weiter vorgesehen:
- eine Abgastemperatur-Einheit zum Erfassen einer Abgastemperatur (T_AG) des Abgases in der Abgasführung,
- ein Gemischregler zum Vorgeben wenigstens einer Drossel-Stellung (LRV) als Stellgröße für eine Komponente der Mischanordnung,
- ein Zündzeitpunktgeber zum Einstellen des Zündzeitpunkts (ZZP) durch die Zündeinrichtung in Abhängigkeit der Abgastemperatur (T_AG) und der Drossel-Stellung (LRV).

Vorzugsweise ist der Otto-Gasmotor an einen Generator zur Bildung eines Stromaggregats angeschlossen, wobei der Zündzeitpunktgeber und/oder der Gemischregler über eine Messleitung zur Führung einer Leistung mit dem Otto-Gasmotor und/oder mit dem Generator verbunden sind. Insbesondere führt das Konzept der Erfindung auf ein Stromaggregat aus Otto-Gasmotor und Generator, insbesondere ein Stromaggregat mit Kraft-Wärme-Kopplung.

Vorzugsweise ist der Gemischregler über wenigstens eine weitere Messleitung zur Führung eines Drucks (MAP) und/oder Temperatur (MAT) des Verbrennungs-Gasgemisches mit einem Druck- und/oder Temperatursensor in der Verbrennungs-Gasgemischführung verbunden.

Erfindungsgemäß ist die Drossel-Stellung (LRV) von einem Gemischregler als Stellgröße an die Komponente der Mischanordnung und/oder den Zündzeitpunktgeber vorgebbar.

Die Komponente der Mischanordnung ist als ein Drosselorgan in einer Gaszuführung gebildet. Insbesondere ist die Komponente der Mischanordnung mittels eines Lambda-Regelventils mit einem Stellglied, z.B. einem Motor, gebildet, über den die Drossel-Stellung (LRV) als Stellung des Lambda-Regelventils vorgebbar ist. Die Mischanordnung umfasst vorteilhaft ein Lambda-Regelventil und einen an das Lambda- Regelventil gasabstromseitig angeschlossenen Mischer, der zum Mischen von Luft und Brenngas zu einem Verbrennungs-Gasgemisch an eine Luftzuführung angeschlossen ist.

Die Mischanordnung kann vorteilhaft auch einen Mischer in Form eines Venturimischers und einen Nullpunktregler aufweisen.

Vorzugsweise weist die Mischanordnung einen Gastemperatursensor auf, der mittels einer Sensorleitung zur Führung einer Gastemperatur (T_ GAS) mit dem Zündzeitpunkt- geber verbunden ist. Die Luftzuführung weist insbesondere einen Lufttemperatursensor auf, der mittels einer Sensorleitung zur Führung einer Lufttemperatur (T_LUFT) mit dem Zündzeitpunktgeber verbunden ist. Vorzugsweise ist die Abgastemperatur-Einheit mittels eines Abgastemperatursensors in der Abgasführung gebildet, der zwischen einem Abgasauslass und einer Abgasturbine angeordnet ist.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: ein Schema eines Otto-Gasmotors mit einem Generator zur Bildung eines Stromaggregats gemäß einer besonders bevorzugten Ausführungsform, bei welcher der Zündzeitpunkt des Otto-Gasmotors über einen Zündzeitpunktgeber in Kombination mit einem Gemischregler vorgebbar ist;
- Fig. 2:: eine schematische Darstellung eines Innenschaltbilds des Zündzeitpunktgebers zur Verdeutlichung eines Verfahrensablaufs zum Betrieb des Otto-Gasmotors unter Einstellung des Zündzeitpunktes;
- Fig. 3:: eine beispielhafte Darstellung einer Drossel-Stellung einer Komponente der Mischanordnung in Form der Position eines Lambda-Gasregelventils über den Brennwert des Brenngases in Form des CH₄-Anteils im Brenngas, welcher sich als weitgehend linearer Zusammenhang zur Regelung des Zündzeitpunkts eignet;
- Fig. 4:: eine beispielhafte Kennlinie eines auf einen Otto-Gasmotor ausgelegten Zündzeitpunkts in Abhängigkeit von einem Brennwert des Brenngases in Form eines optimierten Zündzeitpunkts über den CH₄-Gehalt eines Brenngases;
- Fig. 5:: einen weitgehend konstanten elektrischen Wirkungsgrad bei Anpassung des Zündzeitpunkts gemäß den oben beschriebenen Ausführungsformen im Unterschied zu einer Entwicklung desselben bei konstantem Zündzeitpunkt;
- Fig. 6:: eine weitgehend konstante NOₓ-Emission bei Anpassung des Zündzeitpunkts gemäß den oben beschriebenen Ausführungsformen im Unterschied zu einer Entwicklung bei konstantem Zündzeitpunkt.

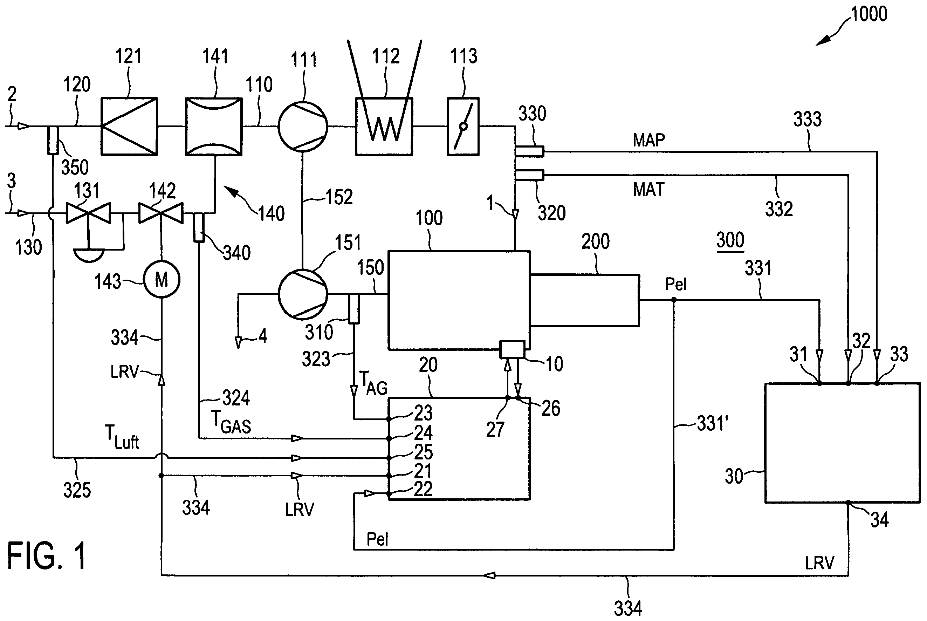

Fig. 1 zeigt ein Stromaggregat 1000 zur Bildung einer dezentralen Energieerzeugung mit einem nicht näher dargestellten Wärmetauscher zur Umsetzung einer Kraft-Wärme-Kopplung. Das Stromaggregat 1000 weist einen Otto-Gasmotor 100 und einen daran angeschlossenen Generator 200 zur Bildung des Stromaggregats 1000 auf.

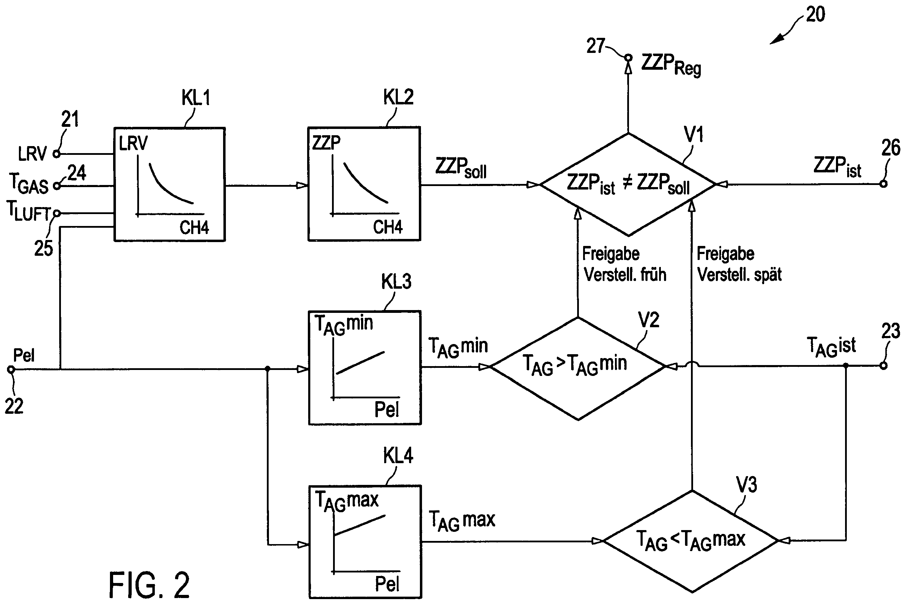

Im Rahmen eines anhand von Fig. 2 näher erläuterten Verfahrens zum Betrieb des Otto-Gasmotors 100 mit Biogas lässt sich dieser unter Einstellung eines Zündzeitpunkts betreiben, um die stark wechselnde Zusammensetzungen und damit Brennwerte des Brenngases z. B. in Schwankungsbreiten zwischen 45 % und 65 % des CH₄-Gehalts auszugleichen. Der wechselnde CH₄-Gehalt steht meistens einem komplementären Gasanteil CO₂ gegenüber, sodass mit zunehmendem CO₂-Anteil die Brenngeschwindigkeit des Gas/Luftgemisches, d.h. des Verbrennungs-Gasgemisches, herabgesetzt wird. Durch Anpassung des Zündzeitpunkts lässt sich - wie im Folgenden erläutert - insbesondere eine verringerte Verbrennungsgeschwindigkeit kompensieren und damit sowohl der Wirkungsgrad als auch eine NOₓ-Emission des Otto-Gasmotors quasi konstant halten - dies zeigen Ergebnisse der Fig.3 und Fig.4.

Der Otto-Gasmotor 100 der bevorzugten Ausführungsform weist eine Zündeinrichtung 10 auf, die über einen Zündzeitpunktgeber 20 in Kombination mit einem Gemischregler 30 zur Vorgabe eines variablen Zündzeitpunkts dient.

Im Einzelnen ist das Stromaggregat 1000 wie folgt aufgebaut. Eingangsseitig weist der Otto-Gasmotor 100 eine Verbrennungs-Gasgemischführung 110 zum Zuführen des Verbrennungs-Gasgemisches 1 zu einem nicht näher dargestellten Verbrennungsraum des Otto-Gasmotors 100 auf. Das Verbrennungs-Gasgemisch 1 wird in der Verbrennungs-Gasgemischführung 110 zunächst von einem Verdichter 111 verdichtet und anschließend wird die dadurch erlangte erhöhte Temperatur des Verbrennungs-Gasgemisches 1 in einem Wärmetauscher 112 gesenkt. Das so gekühlte Verbrennungs-Gasgemisch 1 wird dann über eine Drosselklappe 113, je nach Leistungsbedarf, dem Verbrennungsraum des Otto-Gasmotors 100 zugeführt. Das Verbrennungs-Gasgemisch 1 entsteht durch Mischen von Luft 2 und Gas 3. Die Luft wird in einer Luftzuführung 120 angesaugt, in einem Filter 121 gefiltert und dann einem als Venturimischer gebildeten Mischer 141 einer Mischanordnung 140 zugeführt. Das Gas 3 wird einem nicht näher dargestellten Gasvorratsbehälter entnommen und steht in einer Gaszuführung 130 an einem Absperrventil 131 an. Bei Öffnen des Absperrventils 131 wird das Gas über ein regelbares Lambda-Regelventil 142 als Teil der Mischanordnung 140 dem Mischer 141, je nach Bedarf, zugeführt. Der Venturimischer ist vorliegend mit einem Nulldruckregler kombiniert. Die als Lambda-Regelventil 142 regelbare Komponente der Mischanordnung 140 ist vorliegend über ein Stellglied 143 in Form eines Motors mit vorgebbarem Öffnungswinkel einstellbar. Damit können dem Mischer 141 der Mischanordnung 140 unterschiedliche Mengen an Gas 3 --je nach Drosselstellung des Lambda-Regelventils 142-- zugeführt werden. Mit anderen Worten werden im Mischer 141 --je nach Wahl einer Stellung des Lambda-Regelventils 142-- unterschiedliche Zusammensetzungen an Luft 2 und Gas 3 zur Verfügung gestellt.

Die auf diese Weise variabel einstellbare Zusammensetzung des Verbrennungs-Gasgemisches 1 wird in der zuvor erläuterten Weise über die Verbrennungs-Gasgemischführung 110 einem Verbrennungsraum des Otto-Gasmotors 100 zugeführt. Mittels der Zündeinrichtung 10 wird das Verbrennungs-Gasgemisch 1 im Verbrennungsraum gezündet, verbrannt und als Abgas 4 über einen Auslass des Verbrennungsraums einer Abgasführung 150 zugeführt. In der Abgasführung wird das Abgas 4 über eine Turbine 151 geführt. Die Turbine 151 treibt über eine Welle 152 den oben erläuterten Verdichter 111 in der Verbrennungs-Gasgemischführung 110 an.

Die weitere Darstellung des Stromaggregats 1000 in Fig. 1 umfasst im Wesentlichen die Steuereinrichtung 300 des Stromaggregats. Diese umfasst die vorgenannte Zündeinrichtung 10, den Zündzeitpunktgeber 20 und den Gemischregler 30 sowie die im Folgenden erläuterte Sensorik und die Mess- und Steuerleitungen.

Der Gemischregler 30 weist Eingänge 31, 32, 33 auf, die jeweils der Zuführung von Sensorsignalen für eine elektrische Leistung Pₑₗ des Generators, einer Temperatur MAT sowie einem Druck MAP des Verbrennungs-Gasgemisches 1 vor einem Verbrennungsgaskrümmer des Otto-Gasmotors 100 dienen Temperatur MAT sowie Druck MAP werden also nach dem Wärmetauscher 112, hinter einer Drosselklappe 113 und vor einem Verbrennungsraum des Otto-Gasmotors gemessen. Die elektrische Leistung Pₑₗ des Generators 200 wird an diesem ermittelt und über eine Messleitung 331 dem Eingang 31 zugeführt. Die Temperatur MAT des Verbrennungs-Gasgemisches vor einem Einlasskrümmer des Otto-Gasmotors 100 wird über einen Temperatursensor 320 ermittelt und in einer Messleitung 332 dem Eingang 32 des Gemischreglers 30 zugeführt. Der Druck MAP des Verbrennungs-Gasgemisches 1 vor dem Einlasskrümmer des Otto-Gasmotors 100 wird über einen Sensor 330 ermittelt und über eine Messleitung 333 dem Eingang 33 des Gemischreglers 30 zugeführt. Die Sensoren 320, 330 sind entsprechend nah benachbart in der Verbrennungs-Gasgemischführung 110 zwischen Drosselklappe 113 und Eingangskrümmer des Otto-Gasmotors 100 positioniert.

Der Gemischregler 30 weist außerdem einen Ausgang 34 auf, welcher über eine Steuerleitung 334 sowohl mit dem Zündzeitpunktgeber 20 als auch mit dem Stellglied 143 in Form eines Motors für das Lambda-Regelventil 142 verbunden ist. Die Steuerleitung 334 dient zur Übermittlung eines Sollwertes für eine Drossel-Stellung LRV des Stellgliedes 143 des Lambda-Regelventils 142. Die Drossel-Stellung LRV ist vorliegend als Sollwert einer Stellgröße für das Lambda-Regelventil 142 gebildet. Das Signal für den Sollwert der Drossel-Stellung LRV wird über die Steuerleitung 334 an einen Eingang des Stellglieds 143 weitergegeben als auch gleichzeitig an einen Eingang 21 des Zündzeitpunktgebers 20. Der Zündzeitpunktgeber weist darüber hinaus auch einen Eingang 22 auf, an den ein Abzweig der Messleitung 331 --nämlich eine weitere Messleitung 331' zur Übermittlung der elektrischen Leistung Pₑₗ des Generators 200 an den Zündzeitpunktgeber 20-- angeschlossen ist. Dem Zündzeitpunktgeber 20 steht somit die Drossel-Stellung LRV als Sollwert am Eingang 21 und die elektrische Leistung Pₑₗ des Generators 200 am Eingang 22 zur Verfügung. Darüber hinaus weist der Zündzeitpunktgeber 20 drei weitere Eingänge 23, 24, 25 auf, die zur Aufnahme von Temperaturwerten dienen. Am Eingang 23 des Zündzeitpunktgebers 20 ist eine Sensorleitung 323 zur Führung einer Abgastemperatur T_AG von einem Abgastemperatursensor 310 angeschlossen. Der Abgastemperatursensor 310 ist mit einer Abgasführung 150 zwischen Auslasskrümmer des Otto-Gasmotors 100 und Turbine 151 verbunden. An den Eingang 24 des Zündzeitpunktgebers 20 ist eine Sensorleitung 324 von einem Gastemperatursensor 340 angeschlossen zur Übermittlung einer Gastemperatur T_{gas}. Der Gastemperatursensor 340 ist an eine Gasführung 130 für das Brenngas 3 zwischen Lambda-Regelventil 142 und Mischer 141 verbunden. Am Eingang 25 ist eine Sensorleitung 325 von einem Lufttemperatursensor 350 zur Übermittlung einer Lufttemperatur T_{luft} angeschlossen. Der Lufttemperatursensor 350 ist mit einer Luftführung 120 vor einem Filter 121 verbunden.

Auf diese Weise liegen an den Eingängen 21, 22 die Drossel-Stellung LRV des Lambda-Regelventils 142 und die elektrische Leistung Pₑₗ des Generators 200 an. An den Eingängen 23, 24, 25 liegen die Temperaturen T_AG, T_{gas} und T_{luft} des Abgases 4, des Brenngases 3 und der Luft 2 an. Der Zündzeitpunktgeber 20 ermittelt einen Zündzeitpunkt. Wie anhand Fig. 2 dargestellt ist wird dieser in Abhängigkeit der Abgastemperatur T_AG und der Drossel-Stellung LRV zur Verfügung gestellt, wobei die Drossel-Stellung LRV --vorliegend als Sollwert der Stellgröße- für das Stellglied 143 des Lambda-Regelventils 142 vom Gemischregler 30 vorliegt. Dem Konzept der Erfindung folgend ist die Vorgabe die Drossel-Stellung LRV maßgeblich zum Einstellen des Zündzeitpunkts des Otto-Gasmotors 100 über die Zündeinrichtung 10 desselben in Abhängigkeit der Abgastemperatur T_AG und der Drossel-Stellung LRV. Die Drossel-Stellung LRV wird als Sollwert vom Gemischregler 30 auch dem Stellglied 143 des Lambda-Regelventils 142 vorgegeben. Es erfolgt also eine Einstellung des Zündzeitpunkts als Funktion der Drossel-Stellung LRV und der Abgastemperatur T_AG.

In einer hier nicht dargestellten, abgewandelten Ausführungsform dem Zündzeitpunktgeber 20 kann die Drossel-Stellung LRV auch anders als durch den hier dargestellten Sollwert der Drossel-Stellung LRV vorgegeben werden. In der Abwandlung kann beispielsweise der Sollwert der Drossel-Stellung LRV nur dem Stellglied 143 zur Verfügung gestellt werden. Anschließend kann ein Ist-Wert der Drossel-Stellung LRV dem Eingang 21 des Zündzeitpunktgebers 20 übermittelt werden.

Beide Abwandlungen nutzen die von der Erfindung erkannte verlässliche Korrelation zwischen Drossel-Stellung LRV einer Komponente der Mischanordnung 140 --nämlich hier vorliegend des Stellgliedes 143 für das Lambda-Regelventil 142-- und dem Zündzeitpunkt ZZP.

Es hat sich gezeigt, dass die von der Erfindung erkannte, verlässliche Korrelation nur vergleichsweise geringfügig abhängig ist von den Temperaturen der Luft, des Brenngases und der gefahrenen Leistung T_LUFT, T_GAS, Pₑₗ, die gleichwohl an den Eingängen 22, 24, 25 am Zündzeitpunktgeber 20 anliegen. Solche durch die Lufttemperatur T_LUFT, die Gastemperatur T_GAS und die gefahrene elektrische Leistung Pₑₗ hervorgerufenen Unschärfen können durch eine lineare Verarbeitung entsprechender Sensorsignale in den Sensorleitungen 324, 325 und 331, 331' mittels Korrekturen beseitigt werden.

In Fig. 2 ist das Verfahren zur Einstellung des Zündzeitpunkts ZZP des Otto-Gasmotors 100 grundsätzlich anhand eines Innenschaltbilds des Zündzeitpunktgebers 20 erläutert. Zur weiteren Darstellung des Zündzeitpunktgebers 20 ist dieser in Fig. 2 mit dem in Fig. 1 dargestellten Eingang 21 für die Mischstellung LRV des Lambda-Regelventils 142, Eingang 22 für die gefahrene elektrische Leistung Pₑₗ des Generators 200, Eingang 24 für die Temperatur T_ GAS des Brenngases und Eingang 25 für die Temperatur T_LUFT der Luft dargestellt. Außerdem weist der Zündzeitpunktgeber 20 einen Eingang 23 für die Abgastemperatur T_AG auf und einen in Fig. 1 nicht dargestellten Eingang für einen Ist-Wert ZZPᵢₛₜ eines Zündzeitpunkts 26. Des Weiteren ist der Ausgang 27 für einen Regelwert des Zündzeitpunkts ZZP_{reg} dargestellt.

In einer nicht näher dargestellten Recheneinheit des Zündzeitpunktgebers 20 ist eine erste Kennlinie KL1 hinterlegt, welche die Drossel-Stellung LRV des Stellglieds 143 für das Lambda-Regelventil 142 in Abhängigkeit von einem Brennwert des Brenngases angibt, vorliegend den CH₄-Anteil im Brenngas. Die Kennlinie KL1 ist auf den Otto-Gasmotor 100 ausgelegt und kann beispielsweise durch eine entsprechende Prüfstandmessung oder eine einfache Initialisierung oder dergleichen standardisierte Kalibrierung für einen Otto-Gasmotor einer bestimmten Art erfolgen. Nach ähnlichem Vorgehen ist in der Recheneinheit des Zündzeitpunktgebers 20 eine zweite Kennlinie KL2 hinterlegt, welche den Zündzeitpunkt ZZP in Abhängigkeit von einem Brennwert des Brenngases angibt, vorliegend einen CH₄-Anteil im Brenngas. Durch Korrelation der Kennlinien KL1 und KL2 kann also über die am Eingang 21 anliegende Drossel-Stellung LRV auf den Brennwert des Brenngases geschlossen und anschließend ein Sollwert für den Zündzeitpunkt ZZPₛₒₗₗ ermittelt werden. Der Sollwert des Zündzeitpunkts ZZPₛₒₗₗ wird anschließend einem Vergleichsglied V1 des Zündzeitpunktgebers 20 zur Verfügung gestellt. In dem Vergleichsglied V1 wird verglichen, ob der Sollwert des Zündzeitpunkts ZZPₛₒₗₗ dem Ist-Wert des Zündzeitpunkts ZZPᵢₛₜ entspricht. Für den Fall, dass dies nicht so ist, wird der Regelwert des Zündzeitpunkts ZZP_{reg} - ermittelt aus Sollwert und Ist-Wert des Zündzeitpunkts - als Regelgröße am Ausgang 27 des Zündzeitpunktgebers 20 angelegt. Im einfachsten vorliegenden Fall hat der Sollwert ZZPₛₒₗₗ den Regelwert des Regelwerts ZZP_{reg}. Der Sollwert ZZPₛₒₗₗ dient darüberhinaus zunächst zur Darstellung eines vorläufigen Zündzeitpunkts, was noch erläutert wird.

In die Kennlinie KL1 fließen auch die zuvor erläuterten, einfachen, linearen, bedarfsweise verfügbaren Korrekturen über die Brenngastemperatur T_GAS am Eingang 24 und die Lufttemperatur T_LUFT am Eingang 25 als auch die gefahrene Leistung Pₑₗ am Eingang 22 ein. Die zuvor erläuterte, grundsätzlich verlässlichen Korrelation zwischen Drossel-Stellung LRV und Zündzeitpunkt ZZP bleibt davon unberührt.

Im vorliegenden Ausführungsbeispiel der Fig. 2 erfolgt im Rahmen einer besonders bevorzugten Weiterbildung eine Kontrolle des vorläufigen Zündzeitpunkts ZZPₛₒₗₗ mittels des Vergleichsglieds V2 und V3. Die Kontrolle erfolgt unter Nutzung der vom Generator 200 gefahrenen Leistung Pₑₗ am Eingang 22 und der tatsächlichen Abgastemperatur T_AG, die am Eingang 23 als Ist-Wert des Zündzeitpunktgebers 20 anliegt. Größere Luftanteile können in der Praxis zu störenden Einflüssen bei der Zündzeitpunkteinstellung führen. Deshalb wird der ermittelte Sollwert des Zündzeitpunkts ZZPₛₒₗₗ - auch als vorläufiger Zündzeitpunkt bezeichnet - vorliegend nicht ungeprüft ausgegeben über den Ausgang 27. Zunächst ist dieser mittels einer durch die Vergleichsglieder V2 und V3 zur Verfügung gestellten Kontrollbedingung freizugeben. Hierfür wird abhängig von der aktuellen Motorenleistung Pₑₗ ein unterer und oberer Grenzwert T_AGₘᵢₙ bzw. T_AGₘₐₓ für die Abgastemperatur T_AG über die weiteren Kennlinien KL3 bzw. KL4 ermittelt. Diese werden in den Vergleichsgliedern V2, V3 mit der aktuellen Abgastemperatur T_AG als Ist-Wert verglichen. Liegt dieser Ist-Wert zwischen den Grenzwerten T_AGₘᵢₙ und T_AGₘₐₓ, so wird aus dem Vergleichsgliedern V2, V3 eine positive Freigabe dem Vergleichsglied V1 zur Verfügung gestellt. Erst bei vorliegender Freigabe wird der vorläufige Zündzeitpunkt ZZPₛₒₗₗ als tatsächlicher Regel-Wert für den Zündzeitpunkt ZZP_{reg} vom Zündzeitpunktgeber 20 über den Ausgang 27 der Zündeinrichtung des Otto-Gasmotors 100 zur Verfügung gestellt. Die Kennlinien KL3, KL4 zur Darstellung eines unteren und oberen Grenzwertes T_AGₘᵢₙ bzw. T_AGₘₐₓ folgen im Wesentlichen einer linearen Beziehung zur gefahrenen elektrischen Leistung Pₑₗ. Liegt also die Abgastemperatur T_AG zwischen diesen Grenzwerten bei einer bestimmten aktuellen Leistung Pₑₗ, wird die oben benannte vorläufige Zündzeitpunktfeststellung ZZPₛₒₗₗ als Regelwert ZZP_{reg} freigegeben.

Falls dies nicht erfolgt, übersteigt die akute Abgastemperatur T_AG den oberen Grenzwert T_AGₘₐₓ oder unterschreitet die akute Abgastemperatur T_AG den unteren Grenzwert T_AGₘᵢₙ. Der untere Grenzwert T_AGₘᵢₙ verhindert einen zu frühen Zündzeitpunkt in Folge von hohen Luft- oder Stickstoffanteilen im Brenngas. Diese senken zwar wie CO₂ den Heizwert des Brenngases ab, wirken aber gar nicht oder nur unwesentlich auf die Verbrennungsgeschwindigkeit im Zylinder des Otto-Gasmotors 100. Würde eine Zündzeitpunktverstellung nach früh verursacht durch hohe Luftanteile zugelassen werden, hätte dies eine Überschreitung der NOₓ-Emissionsgrenzwerte und evtl. klopfende Verbrennung zur Folge. In diesem Fall stellt das Vergleichsglied V2 also eine Unterschreitung der minimalen Abgastemperatur T_AGₘᵢₙ fest und verhindert die Freigabe der vorläufigen Zündzeitpunktverstellung. Im anderen Fall wird durch den Grenzwert T_AGₘₐₓ verhindert, dass ältere Motoren mit verschleißbedingtem Anstieg der Abgastemperatur durch zusätzliche Zündzeitpunktverstellung nach spät noch heißer gefahren werden und Gefahr laufen, einer Störabschaltung zu unterliegen. In dem Fall verhindert also das Vergleichsglied V3 eine Freigabe der vorläufigen Zündzeitpunktverstellung, da festgestellt wird, dass der aktuelle Ist-Wert einer Abgastemperatur T_AG bereits das Maximum T_AGₘₐₓ einer Abgastemperatur vor Turbolader überschreitet. Durch die Vergleichsglieder V2, V3 wird insbesondere eine unvorteilhafte Zündzeitpunktverstellung nach früh verhindert aufgrund der abgastemperaturabhängigen Einstellung des Zündzeitpunkts des Otto-Gasmotors 100.

Insgesamt etabliert sich im vorliegenden Ausführungsbeispiel die Einstellung des Zündzeitpunkts ZZP des Otto-Gasmotors 100 über die Zündzeitpunktverstellung mittels des Regelwerts des Zündzeitpunkts ZZP_{reg} in Abhängigkeit der Abgastemperatur dadurch, dass die Abgastemperatur in die durch Vergleichsglieder V2 und V3 etablierte Überprüfung einfließt. Unabhängig davon wird dennoch zunächst ein vorläufiger Sollwert des Zündzeitpunkts ZZPₛₒₗₗ allein aus der Mischstellung LRV bestimmt.

Fig. 3 zeigt eine beispielhafte Kennlinie KL1, wie sie bei einem Zündzeitpunktgeber 20 der Fig. 2 eingesetzt werden kann. Vorliegend ergibt sich der reproduzierbare Zusammenhang zwischen Drossel-Stellung LRV und Brennwert des Brenngases - hier CH₄-Anteil im Brenngas- bei einem Venturimischer und Nulldruckregler zur Gemischbildung des Verbrennungs-Gasgemisches in der Mischanordnung 140 der Fig. 1. Einflüsse von Motorleistung Pₑₗ, Luft- und Gastemperatur T_{luft}, T_{gas} sind, wie erläutert, nur gering und können vernachlässigt bzw. mit linearen Korrekturen ausgeglichen werden.

Mit Hilfe der aus der Kennlinie KL1 gemäß beispielsweise der Fig. 3 gewonnenen Informationen über die Brenngaszusammensetzung bzw. Heizwert des Brenngases kann nun der optimale Zündzeitpunkt bei ausreichender Abmagerungsfähigkeit gemäß der Kennlinie KL2 eingestellt werden. Dies ist eine entsprechend motorspezifische Kennlinie KL2, wie sie z.B. gemäß Fig. 4 wirkungsgrad- und emissionsoptimal für den Otto-Gasmotor 100 eingestellt werden kann. Fig. 4 zeigt dazu den Kurbelwellenwinkel vor dem oberen Totpunkt als optimalen Zündzeitpunkt gemäß Kennlinie KL2 in Fig. 2 zur Gewinnung eines Sollwerts eines Zündzeitpunkts ZZPₛₒₗₗ aus der Brenngaszusammensetzung.

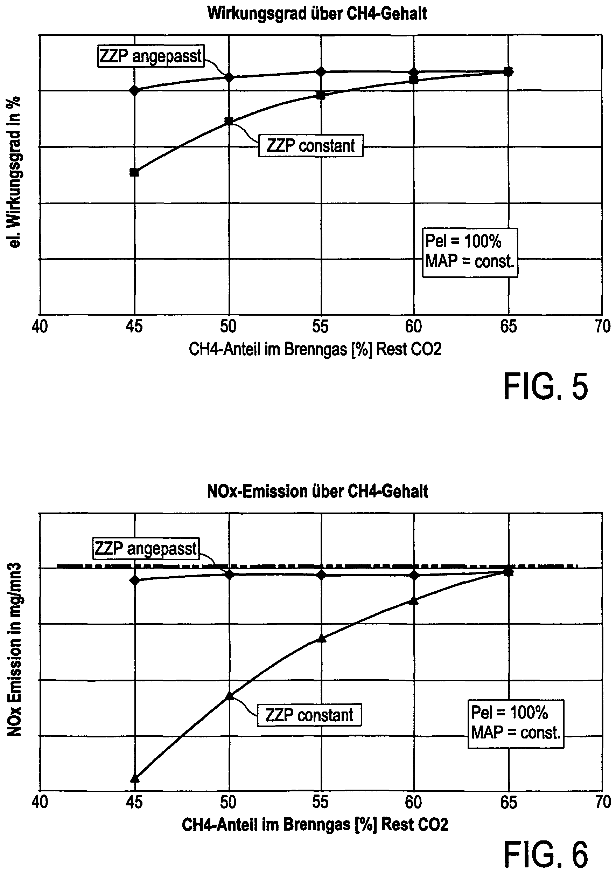

Fig. 5 zeigt, dass durch eine Anpassung des Zündzeitpunkts ZZP gemäß dem vorliegenden Ausführungsbeispiel ein elektrischer Wirkungsgrad über einen breiten Bereich einer Brenngaszusammensetzung nahezu konstant gehalten werden kann. Ebenso zeigt Fig. 6, dass eine NOₓ-Emission über den gleichen breiten Bereich eines CH₄-Gehalts des Brenngases konstant gehalten werden kann. In beiden Fällen gelten die oberen, mit Rauten versehenen Kurven. Als Vergleichsbeispiel ist der deutlich abfallende Wirkungsgrad bzw. die deutliche Zunahme der NOₓ-Emission mit veränderlicher Brenngaszusammensetzung als untere Kurve erkennbar, wenn ein Zündzeitpunkt konstant gehalten ist.

Das Erreichen eines weitgehend konstanten elektrischen Wirkungsgrads bzw. einer weitgehend konstanten NOₓ-Emission ist wichtig, um ein Stromaggregat bzw. einen an das Stromaggregat angeschlossenen Katalysator effektiv und konform mit der Abgasgesetzgebung betreiben zu können.

Zusammenfassend betrifft die Erfindung ein Verfahren zum Betrieb eines Otto-Gasmotors 100, vorzugsweise zum Betrieb mit Brenngas in Form von Biogas, unter Einstellung eines Zündzeitpunktes ZZP des Otto-Gasmotors 100 aufweisend die Schritte: Mischen von Luft 2 und Brenngas 3 zu einem Verbrennungs-Gasgemisch 1 in einer Mischanordnung 140; Zuführen und Zünden des Verbrennungs-Gasgemisches 1 im Verbrennungsraum unter Einstellen eines Zündzeitpunkts ZZP sowie Verbrennen des Verbrennungs-Gasgemisches 1 unter Auslass von Abgas 4 aus dem Verbrennungsraum. Gemäß dem Konzept der Erfindung sind weiter die Schritte vorgesehen: Erfassen einer Abgastemperatur T_AG des Abgases 4; Vorgeben wenigstens einer Drossel-Stellung LRV einer Komponente der Mischanordnung 140; Einstellen des Zündzeitpunkts ZZP des Otto-Gasmotors 100 in Abhängigkeit der Abgastemperatur T_AG und der Drossel-Stellung LRV. Insbesondere wird die Drossel-Stellung LRV von einem Gemischregler 30 als Stellgröße vorgegeben.

### Bezugszeichenliste

- 1: Verbrennungs-Gasgemisch
- 2: Luft
- 3: Gas
- 4: Abgas
- 10: Zündeinrichtung
- 20: Zündzeitpunktgeber
- 21: Eingang
- 22: Eingang
- 23: Eingang
- 24: Eingang
- 25: Eingang
- 26: Eingang
- 27: Ausgang
- 30: Gemischregler
- 31: Eingang
- 32: Eingang
- 33: Eingang
- 34: Ausgang
- 100: Otto-Gasmotor
- 110: Verbrennungs-Gasgemischführung
- 111: Verdichter
- 112: Wärmetauscher
- 113: Drosselklappe
- 120: Luftzuführung, Luftführung
- 130: Gaszuführung, Gasführung
- 131: Absperrventil, Gasventil
- 120: Luftzuführung
- 121: Filter
- 140: Mischanordnung
- 141: Mischer
- 142: Lambda-Regelventil
- 143: Stellglied
- 150: Abgasführung
- 151: Turbine
- 152: Welle
- 200: Generator
- 300: Steuereinrichtung
- 310: Abgastemperatursensor
- 320: Temperatursensor
- 223: Sensorleitung
- 324: Sensorleitung
- 325: Sensorleitung
- 330: Sensor
- 331: Messleitung
- 331': Messleitung
- 332: Messleitung
- 333: Messleitung
- 334: Steuerleitung
- 340: Gastemperatursensor
- 350: Lufttemperatursensor
- 1000: Stromaggregat

- KL1: erste Kennlinie
- KL2: zweite Kennlinie
- KL3: dritte Kennlinie
- KL4: vierte Kennlinie
- LRV: Drossel-Stellung
- MAT: Temperatur des Brenngasgemisches nach der Drosselklappe 113
- MAP: Druck des Brenngasgemisches nach der Drosselklappe 113
- Pₑₗ: elektrische Leistung
- T_AG: Abgastemperatur
- T_AGₘᵢₙ: unterer Grenzwert
- T_AGₘₐₓ: oberer Grenzwert
- T_{gas}: Gastemperatur
- T_{luft}: Lufttemperatur
- V1: Vergleichsglied
- V2: Vergleichsglied
- V3: Vergleichsglied
- ZZP: Zündzeitpunkt ZZP_{reg}Regelwert des Zündzeitpunktes
- ZZPᵢₛₜ: Ist-Wert des Zündzeitpunktes
- ZZPₛₒₗₗ: Sollwert des Zündzeitpunktes

## Patentansprüche

1. Verfahren zum Betrieb eines Otto-Gasmotors (100) unter Einstellung eines Zündzeitpunktes (ZZP), aufweisend die Schritte:
- Mischen von Luft (2) und Brenngas (3) zu einem Verbrennungs-Gasgemisch (1) in einer Mischanordnung (140),
- Zuführen und Zünden des Verbrennungs-Gasgemisches (1) in einem Verbrennungsraum unter Einstellen eines Zündzeitpunkts (ZZP) sowie Verbrennen des Verbrennungs-Gasgemisches (1) und Auslass von Abgas (4) aus dem Verbrennungsraum,
weiter aufweisend die Schritte:
- Erfassen einer Abgastemperatur (T_AG) des Abgases (4),
- Vorgeben wenigstens einer Drossel-Stellung (LRV) einer Komponente der Mischanordnung (140), wobei die Komponente als ein Drosselorgan in einer Gaszuführung (130) gebildet ist,
- Einstellen des Zündzeitpunkts (ZZP) des Otto-Gasmotors (100) in Abhängigkeit der Abgastemperatur (T_AG) und der Drossel-Stellung (LRV), wobei
die Drossel-Stellung (LRV) von einem Gemischregler (30) als Stellgröße vorgegeben wird, wobei der Zündzeitpunkt (ZZP) mittels eines Regelwerts des Zündzeitpunkts (ZZP_{reg}) in Abhängigkeit von dem Sollwert des Zündzeitpunkts (ZZPₛₒₗₗ) und dem Ist-Wert des Zündzeitpunkts (ZZPᵢₛₜ) sowie einer Abgastemperatur (T_AG) derart eingestellt wird, dass ein Ist-Wert einer Abgastemperatur (T_AG) innerhalb eines vorgegebenen Abgastemperaturen-Bereichs liegt oder verbleibt,
**dadurch gekennzeichnet, dass**
- ein Sollwert des Zündzeitpunkts (ZZP) aufgrund der Drossel-Stellung (LRV) ermittelt wird, indem
- ein Brennwert des Brenngases (3) in Abhängigkeit der Drossel-Stellung (LRV) angegeben wird (KL1), und
- ein Sollwert des Zündzeitpunkts (ZZPₛₒₗₗ) in Abhängigkeit von dem Brennwert des Brenngases (3) angegeben wird (KL2), und
- diese Angaben korreliert werden, um den Sollwert des Zündzeitpunkts (ZZPₛₒₗₗ) des Otto-Gasmotors (100) in Abhängigkeit der Drossel-Stellung (LRV) anzugeben.

2. Verfahren nach Anspruch 1 **dadurch gekennzeichnet, dass** die Drossel-Stellung (LRV) von dem Gemischregler (30) als Stellgröße mit einem Sollwert an die Komponente der Mischanordnung (140) und an einen Zündzeitpunktgeber (20) vorgegeben wird, zum Einstellen des Zündzeitpunkts (ZZP) mittels einer Zündeinrichtung (10) des Otto-Gasmotors (100) in Abhängigkeit der Abgastemperatur (T_AG) und der Drossel-Stellung (LRV).

3. Verfahren nach Anspruch 1 oder 2 **dadurch gekennzeichnet, dass** die Drossel-Stellung (LRV) von dem Gemischregler (30) als Stellgröße mit einem Sollwert an die Komponente der Mischanordnung (140) und die Drossel-Stellung (LRV) von der Komponente als Ist-Wert an einen Zündzeitpunktgeber (20) vorgegeben wird, zum Einstellen des Zündzeitpunkts (ZZP) mittels einer Zündeinrichtung (10) des Otto-Gasmotors (100) in Abhängigkeit der Abgastemperatur (T_AG) und der Drossel-Stellung (LRV).

4. Verfahren nach einem der Ansprüche 1 bis 3 **dadurch gekennzeichnet, dass** der Zündzeitpunkt (ZZP) in Abhängigkeit eines Ist-Wertes der Abgastemperatur (T_AG) eingestellt wird.

5. Verfahren nach Anspruch 1 **dadurch gekennzeichnet, dass** über die Zusammensetzung des Brenngases die Drossel-Stellung und der vorläufige Zündzeitpunkt korreliert werden, um den Sollwert des Zündzeitpunkts (ZZP) in Abhängigkeit der Drossel-Stellung (LRV) anzugeben.

6. Verfahren nach einem der Ansprüche 1 bis 5 **dadurch gekennzeichnet, dass** der Brennwert des Brenngases (3) auf Basis einer Zusammensetzung des Brenngases (3) angegeben wird oder dass direkt eine Zusammensetzung des Brenngases (3) in Abhängigkeit der Drossel-Stellung (LRV) angegeben wird.

7. Verfahren nach Anspruch 1 **dadurch gekennzeichnet, dass** die Komponente der Mischanordnung (140) mittels einem regelbaren Lambda-Regelventil (142) gebildet ist, insbesondere mit einem Stellglied (143), über das die Drossel-Stellung (LRV) als Stellung des Lambda-Regelventils vorgebbar ist.

8. Verfahren nach Anspruch 7 **dadurch gekennzeichnet, dass** die Mischanordnung (140) weiter einen an das Lambda-Regelventil gasabstromseitig angeschlossenen Mischer (141) umfasst, der zum Mischen von Luft (2) und Brenngas (3) zu dem Verbrennungs-Gasgemisch (1) an eine Luftzuführung (120) angeschlossen ist.

9. Verfahren nach einem der Ansprüche 1 bis 8 **dadurch gekennzeichnet, dass** ein Regelwert des Zündzeitpunkts (ZZP_{reg}) einer Zündeinrichtung (10) des Otto-Gasmotors (100) als Führungsgröße nur übermittelt wird, wenn ein Ist-Wert einer Abgastemperatur (T_AG) innerhalb eines vorgegebenen Abgastemperaturen-Bereichs liegt.

10. Verfahren nach Anspruch 1 oder 9 **dadurch gekennzeichnet, dass** der Abgastemperaturen-Bereich mit einer Maximal-Abgastemperatur (T_AGmax) und einer Minimal-Abgastemperatur (T_AGₘᵢₙ) abhängig von einer Ausgangsleistung des Otto-Gasmotors (100) ermittelt wird, insbesondere von einer Ausgangsleistung eines an den Otto-Gasmotor (100) angeschlossenen Generators (200).

11. Steuereinrichtung (300) zum Betrieb eines Otto-Gasmotors (100) unter Einstellung eines Zündzeitpunktes (ZZP) des Otto-Gasmotors (100), aufweisend:
- einen Gemischregler (30) mit einem Ausgang (34) für eine Stellgröße zur Vorgabe einer Drossel-Stellung (LRV) einer Komponente einer Mischanordnung (140) für Luft (2) und Brenngas (3) zu einem Verbrennungs-Gasgemisch (1), einen Zündzeitpunktgeber (20) wenigstens mit:
- einem Eingang (23) für eine Abgastemperatur (T_AG) eines Abgases (4) aus einem Verbrennungsraum des Otto-Gasmotors (100) und
- einem Eingang (21) für eine Drossel-Stellung (LRV) der Komponente der Mischanordnung (140),
- einer Recheneinheit zur Vorgabe eines Zündzeitpunkts (ZZP) für eine Zündeinrichtung (10) des Otto-Gasmotors (100) in Abhängigkeit der Abgastemperatur (T_AG) und der Drossel-Stellung (LRV), **dadurch gekennzeichnet, dass** die Drossel-Stellung (LRV) von dem Gemischregler (30) als Stellgröße vorgebbar ist, wobei
o ein Sollwert des Zündzeitpunkts (ZZP) aufgrund der Drossel-Stellung (LRV) ermittelt wird, indem
o ein Brennwert des Brenngases (3) in Abhängigkeit der Drossel-Stellung (LRV) angegeben wird (KL1), und
o ein Sollwert des Zündzeitpunkts (ZZPₛₒₗₗ) in Abhängigkeit von dem Brennwert des Brenngases (3) angegeben wird (KL2), und
o diese Angaben korreliert werden, um den Sollwert des Zündzeitpunkts (ZZPₛₒₗₗ) des Otto-Gasmotors (100) in Abhängigkeit der Drossel-Stellung (LRV) anzugeben, und
- in einem Vergleichsglied (V1) der Zündzeitpunkt (ZZP) mittels eines Regelwerts des Zündzeitpunkts (ZZP_{reg}) in Abhängigkeit von dem Sollwert des Zündzeitpunkts (ZZPₛₒₗₗ) und dem Ist-Wert des Zündzeitpunkts (ZZPᵢₛₜ) sowie einer Abgastemperatur (T_AG) derart einstellbar ist, dass ein Ist-Wert einer Abgastemperatur (T_AG) innerhalb eines vorgegebenen Abgastemperaturen-Bereichs liegt oder verbleibt, und
- einem Ausgang (27) für den Zündzeitpunkt (ZZP) zu einer Zündeinrichtung (10) des Otto-Gasmotors (100), und
- einer Steuerleitung (334) zur Führung eines Wertes für die Drossel-Stellung (LRV) vom Gemischregler (30) zum Zündzeitpunktgeber (20) und der Komponente der Mischanordnung (140).

12. Steuereinrichtung (300) nach Anspruch 11 **dadurch gekennzeichnet, dass** der Gemischregler (30) und der Zündzeitpunktgeber (20) über die Steuerleitung (334) zur Führung eines Sollwertes für die Drossel-Stellung (LRV) verbunden sind.

13. Steuereinrichtung (300) nach Anspruch 12 **dadurch gekennzeichnet, dass** der Zündzeitpunktgeber (20) und die Komponente der Mischanordnung (140) über die Steuerleitung (334) zur Führung eines Ist-Wertes für die Drossel-Stellung (LRV) verbunden sind.

14. Steuereinrichtung (300) nach einem der Ansprüche 11 bis 13 **dadurch gekennzeichnet,**
**dass** die Recheneinheit des Zündzeitpunktgebers (20) eine erste Kennlinie (KL1) für einen auf
den Otto-Gasmotor (100) ausgelegte Drossel-Stellung (LRV) einer Komponente der Mischanordnung (140) des Otto-Gasmotors (100) aufweist, wobei die erste Kennlinie (KL1)
die Drossel-Stellung (LRV) in Abhängigkeit von einer Zusammensetzung des Brenngases (3) angibt.

15. Steuereinrichtung (300) nach einem der Ansprüche 11 bis 14 **dadurch gekennzeichnet,**
**dass** die Recheneinheit des Zündzeitpunktgebers (20) eine zweite Kennlinie (KL2) für einen auf
den Otto-Gasmotor (100) ausgelegten Zündzeitpunkt (ZZP) für eine Zündeinrichtung (10) des Otto-Gasmotors (100) aufweist, wobei die zweite Kennlinie (KL2) den Zündzeitpunkt (ZZP) in Abhängigkeit von einer Zusammensetzung des Brenngases (3) angibt.

16. Steuereinrichtung (300) nach einem der Ansprüche 11 bis 14 **dadurch gekennzeichnet, dass** der Zündzeitpunktgeber (20) eine Kontrolleinheit aufweist, mittels der ein Zündzeitpunkt (ZZP) für den Fall freigebbar ist, dass ein Ist-Wert einer Abgastemperatur, (T_AG) in einem Abgastemperaturen-Bereich abhängig von einer Ausgangsleistung des Otto-Gasmotors (100) liegt.

## Claims

1. Method for operating a spark-ignition gas engine (100) by setting an ignition time (ZZP), comprising the steps of:
- mixing air (2) and fuel gas (3) to form a combustion gas mixture (1) in a mixing arrangement (140),
- feeding in and igniting the combustion gas mixture (1) in a combustion chamber while setting an ignition time (ZZP) and burning the combustion gas mixture (1) and discharging exhaust gas (4) from the combustion chamber,
also comprising the steps of:
- detecting an exhaust-gas temperature (T_AG) of the exhaust gas (4),
- presetting at least one throttle position (LRV) of a component of the mixing arrangement (140), the component being formed as a throttling member in a gas feed (130),
- setting the ignition time (ZZP) of the spark-ignition gas engine (100) in dependence on the exhaust-gas temperature (T_AG) and the throttle position (LRV), wherein
the throttle position (LRV) is preset as a manipulated variable by a mixture controller (30), wherein the ignition time (ZZP) is set by means of a control value of the ignition time (ZZPreg) in dependence on the setpoint value of the ignition time (ZZPsoll) and the actual value of the ignition time (ZZPist) and also an exhaust-gas temperature (T_AG) in such a way that an actual value of an exhaust-gas temperature (T_AG) lies or remains within a preset exhaust-gas temperature range,
**characterized in that**
- a setpoint value of the ignition time (ZZP) is determined on the basis of the throttle position (LRV), **in that**
- a calorific value of the fuel gas (3) is indicated in dependence on the throttle position (LRV) (KL1), and
- a setpoint value of the ignition time (ZZPsoll) is indicated in dependence on the calorific value of the fuel gas (3) (KL2), and
- these indications are correlated in order to indicate the setpoint value of the ignition time (ZZPsoll) of the spark-ignition gas engine (100) in dependence on the throttle position (LRV).

2. Method according to Claim 1, **characterized in that** the throttle position (LRV) is preset by the mixture controller (30) as a manipulated variable with a setpoint value for the component of the mixing arrangement (140) and for an ignition timer (20), to set the ignition time (ZZP) by means of an ignition device (10) of the spark-ignition gas engine (100) in dependence on the exhaust-gas temperature (T_AG) and the throttle position (LRV).

3. Method according to Claim 1 or 2, **characterized in that** the throttle position (LRV) is preset by the mixture controller (30) as a manipulated variable with a setpoint value for the component of the mixing arrangement (140) and the throttle position (LRV) is preset by the component as an actual value for an ignition timer (20), to set the ignition time (ZZP) by means of an ignition device (10) of the spark-ignition gas engine (100) in dependence on the exhaust-gas temperature (T_AG) and the throttle position (LRV).

4. Method according to one of Claims 1 to 3, **characterized in that** the ignition time (ZZP) is set in dependence on an actual value of the exhaust-gas temperature (T_AG).

5. Method according to Claim 1, **characterized in that** the composition of the fuel gas is used to correlate the throttle position and the provisional ignition time, in order to indicate the setpoint value of the ignition time (ZZP) in dependence on the throttle position (LRV).

6. Method according to one of Claims 1 to 5, **characterized in that** the calorific value of the fuel gas (3) is indicated on the basis of a composition of the fuel gas (3) or **in that** a composition of the fuel gas (3) is indicated directly in dependence on the throttle position (LRV).

7. Method according to Claim 1, **characterized in that** the component of the mixing arrangement (140) is formed by means of a controllable lambda control valve (142), in particular with an actuating element (143), by way of which the throttle position (LRV) can be preset as a position of the lambda control valve.

8. Method according to Claim 7, **characterized in that** the mixing arrangement (140) also comprises a mixer (141), which is connected to the lambda control valve on the downstream side of the gas and is connected to an air feed (120) to mix air (2) and fuel gas (3) to form the combustion gas mixture (1).

9. Method according to one of Claims 1 to 8, **characterized in that** a control value of the ignition time (ZZPreg) of an ignition device (10) of the spark-ignition gas engine (100) is only transmitted as a reference variable if an actual value of an exhaust-gas temperature (T_AG) lies within a preset exhaust-gas temperature range.

10. Method according to Claim 1 or 9, **characterized in that** the exhaust-gas temperature range is determined with a maximum exhaust-gas temperature (T_AGmax) and a minimum exhaust-gas temperature (T_AGmin) dependent on an output power of the spark-ignition gas engine (100), in particular on an output power of a generator (200) connected to the spark-ignition gas engine (100).

11. Control device (300) for operating a spark-ignition gas engine (100) by setting an ignition time (ZZP) of the spark-ignition gas engine (100), comprising:
- a mixture controller (30) with an output (34) for a manipulated variable to preset a throttle position (LRV) of a component of a mixing arrangement (140) for air (2) and fuel gas (3) to form a combustion gas mixture (1), an ignition timer (20) at least with:
- an input (23) for an exhaust-gas temperature (T_AG) of an exhaust gas (4) from a combustion chamber of the spark-ignition gas engine (100) and
- an input (21) for a throttle position (LRV) of the component of the mixing arrangement (140),
- a computing unit to preset an ignition time (ZZP) for an ignition device (10) of the spark-ignition gas engine (100) in dependence on the exhaust-gas temperature (T_AG) and the throttle position (LRV), **characterized in that** the throttle position (LRV) can be preset as a manipulated variable by the mixture controller (30), wherein
o a setpoint value of the ignition time (ZZP) is determined on the basis of the throttle position (LRV), **in that**
o a calorific value of the fuel gas (3) is indicated in dependence on the throttle position (LRV) (KL1), and
o a setpoint value of the ignition time (ZZPsoll) is indicated in dependence on the calorific value of the fuel gas (3) (KL2), and
o these indications are correlated in order to indicate the setpoint value of the ignition time (ZZPsoll) of the spark-ignition gas engine (100) in dependence on the throttle position (LRV), and
- in a comparing element (V1) the ignition time (ZZP) can be set by means of a control value of the ignition time (ZZPreg) in dependence on the setpoint value of the ignition time (ZZPsoll) and the actual value of the ignition time (ZZPist) and also an exhaust-gas temperature (T_AG) in such a way that an actual value of an exhaust-gas temperature (T_AG) lies or remains within a preset exhaust-gas temperature range, and
- an output (27) for the ignition time (ZZP) to an ignition device (10) of the spark-ignition gas engine (100), and
- a control line (334) to guide a value for the throttle position (LRV) from the mixture controller (30) to the ignition timer (20) and the component of the mixing arrangement (140).

12. Control device (300) according to Claim 11, **characterized in that** the mixture controller (30) and the ignition timer (20) are connected via the control line (334) to guide a setpoint value for the throttle position (LRV).

13. Control device (300) according to Claim 12, **characterized in that** the ignition timer (20) and the component of the mixing arrangement (140) are connected via the control line (334) to guide an actual value for the throttle position (LRV).

14. Control device (300) according to one of Claims 11 to 13, **characterized in that** the computing unit of the ignition timer (20) has a first characteristic (KL1) for a throttle position (LRV) of a component of the mixing arrangement (140) of the spark-ignition gas engine (100) designed for the spark-ignition gas engine (100), the first characteristic (KL1) indicating the throttle position (LRV) in dependence on a composition of the fuel gas (3).

15. Control device (300) according to one of Claims 11 to 14, **characterized in that** the computing unit of the ignition timer (20) has a second characteristic (KL2) for an ignition time (ZZP) designed for the spark-ignition gas engine (100) for an ignition device (10) of the spark-ignition gas engine (100), the second characteristic (KL2) indicating the ignition time (ZZP) in dependence on a composition of the fuel gas (3).

16. Control device (300) according to one of Claims 11 to 14, **characterized in that** the ignition timer (20) has a monitoring unit, by means of which an ignition time (ZZP) can be enabled in the event that an actual value of an exhaust-gas temperature (T_AG) lies in an exhaust-gas temperature range dependent on an output power of the spark-ignition gas engine (100).

## Revendications

1. Procédé permettant de faire fonctionner un moteur à gaz à allumage commandé (100) en réglant un point d'allumage (ZZP), présentant les étapes consistant à :
- mélanger de l'air (2) et un gaz combustible (3) pour former un mélange gazeux de combustion (1) dans un agencement de mélange (140),
- amener et allumer le mélange gazeux de combustion (1) dans une chambre de combustion en réglant un point d'allumage (ZZP), ainsi que brûler le mélange gazeux de combustion (1) et évacuer les gaz d'échappement (4) de la chambre de combustion,
présentant en outre les étapes consistant à :
- détecter une température de gaz d'échappement (T_AG) des gaz d'échappement (4),
- spécifier au moins une position d'étranglement (LRV) d'un composant de l'agencement de mélange (140), le composant étant formé comme un organe d'étranglement dans une amenée de gaz (130),
- régler le point d'allumage (ZZP) du moteur à gaz à allumage commandé (100) en fonction de la température de gaz d'échappement (T_AG) et de la position d'étranglement (LRV), la position d'étranglement (LRV) étant spécifiée par un régulateur de mélange (30) sous forme de grandeur de réglage, dans lequel le point d'allumage (ZZP) est réglé au moyen d'une valeur de régulation du point d'allumage (ZZPreg) en fonction de la valeur de consigne du point d'allumage (ZZPsoll) et de la valeur réelle du point d'allumage (ZZPist) ainsi que d'une température de gaz d'échappement (T_AG) de telle sorte qu'une valeur réelle d'une température de gaz d'échappement (T_AG) est située ou reste à l'intérieur d'une plage de températures de gaz d'échappement spécifiée,
**caractérisé en ce que**
- une valeur de consigne du point d'allumage (ZZP) est établie sur la base de la position d'étranglement (LRV), **en ce que**
- une valeur énergétique du gaz combustible (3) est indiquée (KL1) en fonction de la position d'étranglement (LRV), et
- une valeur de consigne du point d'allumage (ZZPsoll) est indiquée (KL2) en fonction de la valeur énergétique du gaz combustible (3), et
- ces indications sont mises en corrélation pour indiquer la valeur de consigne du point d'allumage (ZZPsoll) du moteur à gaz à allumage commandé (100) en fonction de la position d'étranglement (LRV).

2. Procédé selon la revendication 1, **caractérisé en ce que** la position d'étranglement (LRV) est spécifiée par le régulateur de mélange (30) sous forme de grandeur de réglage avec une valeur de consigne pour le composant de l'agencement de mélange (140) et un générateur de point d'allumage (20) pour régler le point d'allumage (ZZP) au moyen d'un dispositif d'allumage (10) du moteur à gaz à allumage commandé (100) en fonction de la température de gaz d'échappement (T_AG) et de la position d'étranglement (LRV).

3. Procédé selon la revendication 1 ou 2, **caractérisé en ce que** la position d'étranglement (LRV) est spécifiée par le régulateur de mélange (30) sous forme de grandeur de réglage avec une valeur de consigne pour le composant de l'agencement de mélange (140), et la position d'étranglement (LRV) est spécifiée par le composant comme valeur réelle pour un générateur de point d'allumage (20) afin de régler le point d'allumage (ZZP) au moyen d'un dispositif d'allumage (10) du moteur à gaz à allumage commandé (100) en fonction de la température de gaz d'échappement (T_AG) et de la position d'étranglement (LRV).

4. Procédé selon l'une quelconque des revendications 1 à 3, **caractérisé en ce que** le point d'allumage (ZZP) est réglé en fonction d'une valeur réelle de la température de gaz d'échappement (T_AG).

5. Procédé selon la revendication 1, **caractérisé en ce que** par l'intermédiaire de la composition du gaz combustible, la position d'étranglement et le point d'allumage provisoire sont mis en corrélation afin d'indiquer la valeur de consigne du point d'allumage (ZZP) en fonction de la position d'étranglement (LRV).

6. Procédé selon l'une quelconque des revendications 1 à 5, **caractérisé en ce que** la valeur énergétique du gaz combustible (3) est spécifiée sur la base d'une composition du gaz combustible (3), ou **en ce que** directement une composition du gaz combustible (3) est spécifiée en fonction de la position d'étranglement (LRV).

7. Procédé selon la revendication 1, **caractérisé en ce que** le composant de l'agencement de mélange (140) est formé au moyen d'une vanne de réglage lambda (142) réglable, en particulier avec un actionneur (143) qui permet de spécifier la position d'étranglement (LRV) comme la position de la vanne de réglage lambda.

8. Procédé selon la revendication 7, **caractérisé en ce que** l'agencement de mélange (140) comprend en outre un mélangeur (141) raccordé côté écoulement de gaz à la vanne de réglage lambda, et raccordé à une amenée d'air (120) pour mélanger l'air (2) et le gaz combustible (3) pour former un mélange gazeux de combustion (1).

9. Procédé selon l'une quelconque des revendications 1 à 8, **caractérisé en ce qu'**une valeur de régulation du point d'allumage (ZZPreg) d'un dispositif d'allumage (10) du moteur à gaz à allumage commandé (100) n'est transmise comme grandeur de guidage que si une valeur réelle d'une température de gaz d'échappement (T_AG) se situe à l'intérieur d'une plage de températures de gaz d'échappement.

10. Procédé selon la revendication 1 ou 9, **caractérisé en ce que** la plage de temps de gaz d'échappement est établie avec une température de gaz d'échappement maximale (T_AGmax) et une température de gaz d'échappement minimale (T_AGmin) en fonction d'une puissance de sortie du moteur à gaz à allumage commandé (100), en particulier d'une puissance de sortie d'un générateur (200) raccordé au moteur à gaz à allumage commandé (100).

11. Dispositif de commande (300) permettant de faire fonctionner un moteur à gaz à allumage commandé (100) en réglant un point d'allumage (ZZP) du moteur à gaz à allumage commandé (100), présentant:
- un régulateur de mélange (30) pourvu d'une sortie (34) pour une grandeur de réglage afin de spécifier une position d'étranglement (LRV) d'un composant d'un agencement de mélange (140) pour l'air (2) et le gaz combustible (3) pour former un mélange gazeux de combustion (1), un générateur de point d'allumage (20) comprenant au moins :
- une entrée (23) pour une température de gaz d'échappement (T_AG) des gaz d'échappement (4) provenant d'une chambre de combustion du moteur à gaz à allumage commandé (100), et
- une entrée (21) pour une position d'étranglement (LRV) du composant de l'agencement de mélange (140),
- une unité de calcul pour spécifier un point d'allumage (ZZP) pour un dispositif d'allumage (10) du moteur à gaz à allumage commandé (100) en fonction de la température de gaz d'échappement (T_AG) et de la position d'étranglement (LRV),
**caractérisé en ce que** la position d'étranglement (LRV) peut être spécifiée par le régulateur de mélange (30) comme une grandeur de réglage, dans lequel
o une valeur de consigne du point d'allumage (ZZP) est établie sur la base de la position d'étranglement (LRV), **en ce que**
o une valeur énergétique du gaz combustible (3) est indiquée (KL1) en fonction de la position d'étranglement (LRV), et
o une valeur de consigne du point d'allumage (ZZPsoll) est indiquée (KL2) en fonction de la valeur énergétique du gaz combustible (3), et
o ces indications sont mises en corrélation pour indiquer la valeur de consigne du point d'allumage (ZZPsoll) du moteur à gaz à allumage commandé (100) en fonction de la position d'étranglement (LRV), et
- dans un comparateur (V1), le point d'allumage (ZZP) est réglable au moyen d'une valeur de régulation du point d'allumage (ZZPreg) en fonction de la valeur de consigne du point d'allumage (ZZPsoll) et de la valeur réelle du point d'allumage (ZZPist), ainsi que d'une température de gaz d'échappement (T_AG) de telle sorte qu'une valeur réelle d'une température de gaz d'échappement (T_AG) est située ou reste à l'intérieur d'une plage de températures de gaz d'échappement spécifiée, et
- une sortie (27) pour le point d'allumage (ZZP) vers un dispositif d'allumage (10) du moteur à gaz à allumage commandé (100), et
- une ligne de commande (334) pour acheminer une valeur pour la position d'étranglement (LRV) du régulateur de mélange (30) au générateur de point d'allumage (20) et au composant de l'agencement de mélange (140).

12. Dispositif de commande (300) selon la revendication 11, **caractérisé en ce que** le régulateur de mélange (30) et le générateur de point d'allumage (20) sont reliés par la ligne de commande (334) pour acheminer une valeur de consigne pour la position d'étranglement (LRV).

13. Dispositif de commande (300) selon la revendication 12, **caractérisé en ce que** le générateur de point d'allumage (20) et le composant de l'agencement de mélange (140) sont reliés par la ligne de commande (334) pour acheminer une valeur réelle pour la position d'étranglement (LRV).

14. Dispositif de commande (300) selon l'une quelconque des revendications 11 à 13, **caractérisé en ce que** l'unité de calcul du générateur de point d'allumage (20) présente une première courbe caractéristique (KL1) pour une position d'étranglement (LRV), conçue pour le moteur à gaz à allumage commandé (100), d'un composant de l'agencement de mélange (140) du moteur à gaz à allumage commandé (100), la première courbe caractéristique (KL1) indiquant la position d'étranglement (LRV) en fonction d'une composition du gaz combustible (3).

15. Dispositif de commande (300) selon l'une quelconque des revendications 11 à 14, **caractérisé en ce que** l'unité de calcul du générateur de point d'allumage (20) présente une deuxième courbe caractéristique (KL2) pour un point d'allumage (ZZP), conçu pour le moteur à gaz à allumage commandé (100), pour un dispositif d'allumage (10) du moteur à gaz à allumage commandé (100), la deuxième courbe caractéristique (KL2) indiquant le point d'allumage (ZZP) en fonction d'une composition du gaz combustible (3).

16. Dispositif de commande (300) selon l'une quelconque des revendications 11 à 14, **caractérisé en ce que** le générateur de point d'allumage (20) présente une unité de contrôle qui permet de valider un point d'allumage (ZZP) au cas où une valeur réelle d'une température de gaz d'échappement (T_AG) se situerait dans une plage de températures de gaz d'échappement en fonction d'une puissance de sortie du moteur à gaz à allumage commandé (100).
